# EUROPEAN PATENT SPECIFICATION

(11) **EP 2 500 654 B1**
(45) Date of publication and mention of the grant of the patent: **17.04.2019**
(21) Application number: 10828373.0
(22) Date of filing: 08.11.2010
(51) Int. Cl.: F23R 3/14, F02C 7/22, F23R 3/28

(54) **COMBUSTION BURNER FOR GAS TURBINE**
BRENNER FÜR EINE GASTURBINE
BRÛLEUR À COMBUSTION POUR TURBINE À GAZ

(30) Priority: 09.11.2009 JP 2009256074
(43) Date of publication of application: 19.09.2012
(73) Proprietor: Mitsubishi Heavy Industries, Ltd., Tokyo 108-8215 (JP)
(72) Inventor: TAKIGUCHI, Satoshi, Tokyo 108-8215 (JP); AKAMATSU, Shinji, Tokyo 108-8215 (JP); SATO, Kenji, Tokyo 108-8215 (JP); ABE, Naoki, Tokyo 108-8215 (JP)
(74) Representative: Henkel, Breuer & Partner
(86) International application number: PCT/JP2010/069794
(87) International publication number: WO 2011/055815

(56) References cited:
- EP-A2- 1 312 866
- DE-A1-102009 003 347
- JP-A- 6 221 560
- JP-A- 2003 042 453
- JP-A- 2003 074 855
- JP-A- 2009 168 439

## Description

### {Technical Field}

The present invention relates to gas turbine combustion burners having swirling vanes (swirler vanes) for ejecting fuel from fuel ejection holes into air or a mixture of air and fuel flowing from the upstream side while applying a swirling force to form a swirling mixed airflow.

### {Background Art}

A known example of this type of gas turbine combustion burner is disclosed in JP 2003-74855 A.

DE 102009003347A1 discloses a gas turbine combustor provided with swirling vanes, wherein one or more internal cavities from which fuel is ejected through fuel ejection holes towards the pressure and suction sides of the swirling vanes are formed in the interior of the swirling vanes. Holes are generally described to supply the fuel from a central body into the cavities.

### {Summary of Invention}

### {Technical Problem}

However, the combustion burner disclosed in JP 2003-74855 A above has a problem in that fuel flowing through gas fuel passages (fuel passages) 8 into gas fuel passage portions (cavities) 16 provided inside swirlers (swirling vanes) 14 forms vortices in the gas fuel passage portions 16, and the vortices create a pressure gradient in the gas fuel passage portions 16, thus leading to varying amounts of fuel ejected from small holes (ejection holes) 15.

An object of the present invention, which has been made in light of the above circumstances, is to provide a gas turbine combustion burner capable of uniformly ejecting fuel from ejection holes for reduced NOₓ emissions of gas turbine combustors.

### {Solution to Problem}

To solve the above problem, the present invention provides a gas turbine combustion burner as defined in claim 1, 3 or 4.

A gas turbine combustion burner according to a first aspect of the present invention is a gas turbine combustion burner that includes a plurality of swirling vanes for ejecting fuel from fuel ejection holes into air or a mixture of air and fuel flowing from an upstream side while applying a swirling force to form a swirling mixed airflow and a nozzle having the swirling vanes arranged radially on an outer circumferential surface thereof and having a plurality of first fuel passage, through which the fuel is guided to the fuel ejection holes, provided therein, a cavity communicating with the fuel ejection holes is provided in each swirling vane, and at least two second fuel passages are provided between the cavity and the first fuel passages along an axial direction.

In the gas turbine combustion burner according to the first aspect of the present invention, the fuel guided (supplied) through the first fuel passages toward the swirling vanes is guided through at least two (the plurality of) second fuel passages to the cavities and is ejected (jetted) from the fuel ejection holes. As the fuel passes through the second fuel passages, dynamic pressure generated in the first fuel passage is dispersed so that the fuel flows (is supplied) evenly (uniformly) from the individual second fuel passages into the cavities, thus preventing the formation of vortices in the cavities.

This allows uniform ejection of the fuel from the fuel ejection holes, thus contributing to reduced NOₓ emissions of gas turbine combustors.

A gas turbine combustion burner according to a second aspect of the present invention is a gas turbine combustion burner that includes a plurality of swirling vanes for ejecting fuel from fuel ejection holes into air or a mixture of air and fuel flowing from an upstream side while applying a swirling force to form a swirling mixed airflow and a nozzle having the swirling vanes arranged radially on an outer circumferential surface thereof and having a first fuel passage, through which the fuel is guided to the fuel ejection holes, provided therein, a cavity communicating with the fuel ejection holes is provided in each swirling vane, a slit-like second fuel passage is provided between the cavity and the first fuel passage along an axial direction, and a rectifier grid is disposed at an exit or entrance end of the second fuel passage.

In the gas turbine combustion burner according to the second aspect of the present invention, the fuel guided (supplied) through the first fuel passage toward the swirling vanes is guided through the slit-like second fuel passages and the rectifier grids to the cavities and is ejected (jetted) from the fuel ejection holes. As the fuel passes through the second fuel passages and the rectifier grids, dynamic pressure generated in the first fuel passage is dispersed so that the fuel flows (is supplied) evenly (uniformly) from the second fuel passages into the cavities, thus preventing the formation of vortices in the cavities.

This allows uniform ejection of the fuel from the fuel ejection holes, thus contributing to reduced NOₓ emissions of gas turbine combustors.

A gas turbine combustion burner according to a third aspect of the present invention is a gas turbine combustion burner that includes a plurality of swirling vanes for ejecting fuel from fuel ejection holes into air or a mixture of air and fuel flowing from an upstream side while applying a swirling force to form a swirling mixed airflow and a nozzle having the swirling vanes arranged radially on an outer circumferential surface thereof and having a first fuel passage, through which the fuel is guided to the fuel ejection holes, provided therein, a cavity communicating with the fuel ejection holes is provided in each swirling vane, a slit-like second fuel passage is provided between the cavity and the first fuel passage along an axial direction, and a pressure loss member is disposed in the first fuel passage near the upstream side of the second fuel passage.

In the gas turbine combustion burner according to the third aspect of the present invention, the fuel guided (supplied) through the first fuel passage toward the swirling vanes is guided through the slit-like second fuel passages and the pressure loss member to the cavities and is ejected (jetted) from the fuel ejection holes. As the fuel passes through the second fuel passages and the pressure loss member, dynamic pressure generated in the first fuel passage is dispersed so that the fuel flows (is supplied) evenly (uniformly) from the second fuel passages into the cavities, thus preventing the formation of vortices in the cavities.

This allows uniform ejection of the fuel from the fuel ejection holes, thus contributing to reduced NOₓ emissions of gas turbine combustors.

A gas turbine combustor according to a fourth aspect of the present invention includes any one of the above gas turbine combustion burners.

The gas turbine combustor according to the fourth aspect of the present invention includes a gas turbine combustion burner capable of uniformly ejecting fuel from ejection holes, thus contributing to reduced NOₓ emissions of the gas turbine combustor.

### {Advantageous Effects of Invention}

The gas turbine combustion burners according to the present invention provide the advantage of uniformly ejecting fuel from the ejection holes, thus contributing to reduced NOₓ emissions of gas turbine combustors.

### {Brief Description of Drawings}

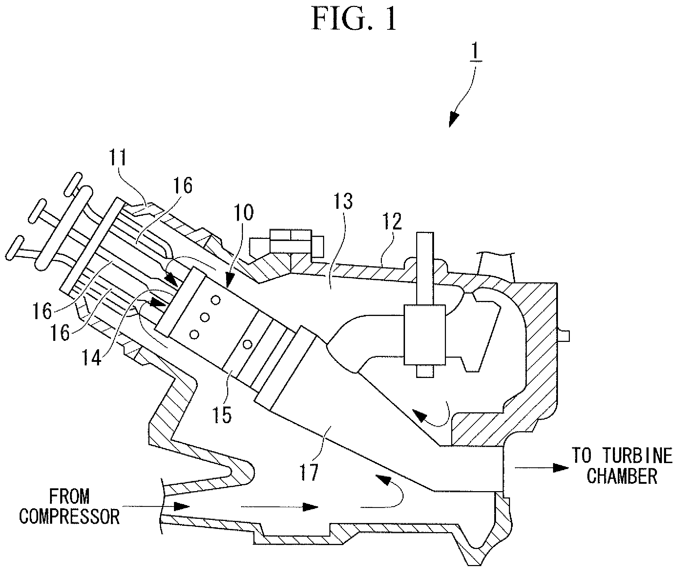

{Fig. 1}
   Fig. 1 is a schematic structural diagram showing a gas turbine combustor including gas turbine combustion burners according to the present invention.
{Fig. 2}
   Fig. 2 is a perspective view showing the gas turbine combustor shown in Fig. 1, showing fuel nozzles, an inner cylinder, and a tailpipe in an exploded view.
{Fig. 3}
   Fig. 3 is a sectional view showing, in magnified view, a relevant part of a gas turbine combustion burner according to a first example serving to explain features of the present invention.
{Fig. 4}
   Fig. 4 is a sectional view as viewed along arrow IV-IV in Fig. 3.
{Fig. 5}
   Fig. 5 is a sectional view as viewed along arrow V-V in Fig. 3.
{Fig. 6}
   Fig. 6 is a sectional view showing, in magnified view, a relevant part of a gas turbine combustion burner according to a first embodiment of the present invention.
{Fig. 7}
   Fig. 7 is a sectional view as viewed along arrow VII-VII in Fig. 6.
{Fig. 8}
   Fig. 8 is a sectional view showing, in magnified view, a relevant part of a gas turbine combustion burner according to a second embodiment of the present invention.
{Fig. 9}
   Fig. 9 is a sectional view showing, in magnified view, a relevant part of a gas turbine combustion burner according to another embodiment of the present invention.
{Fig. 10}
   Fig. 10 is a sectional view as viewed along arrow X-X in Fig. 9.
{Fig. 11A}
   Fig. 11A is a sectional view as viewed along arrow XI-XI in Fig. 9 (example not according to the invention as claimed).
{Fig. 11B}
   Fig. 11B is a sectional view as viewed along arrow XI-XI in Fig. 9.

### {Description of Embodiments}

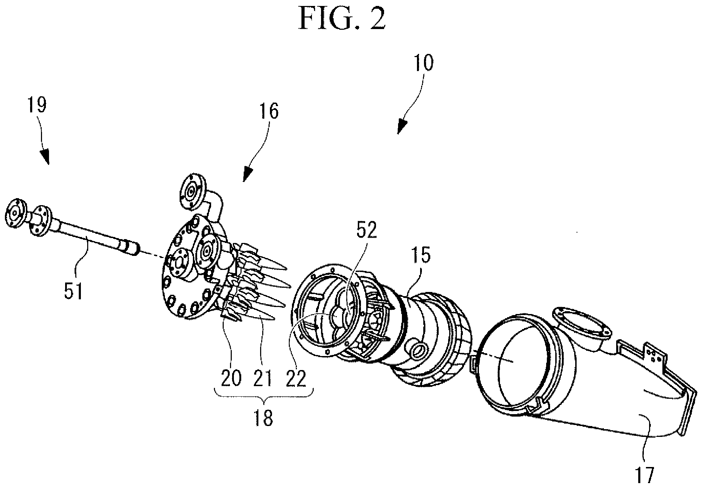

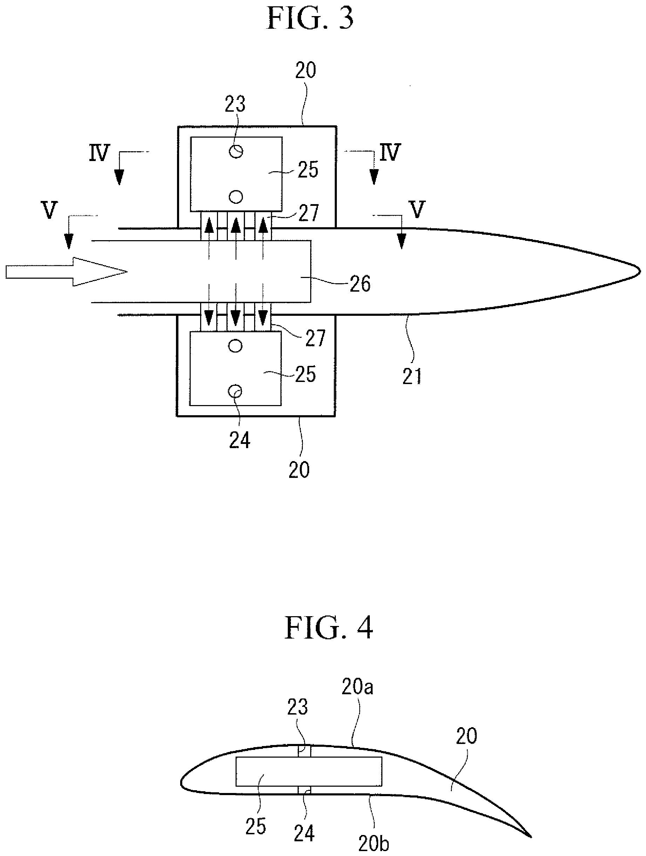

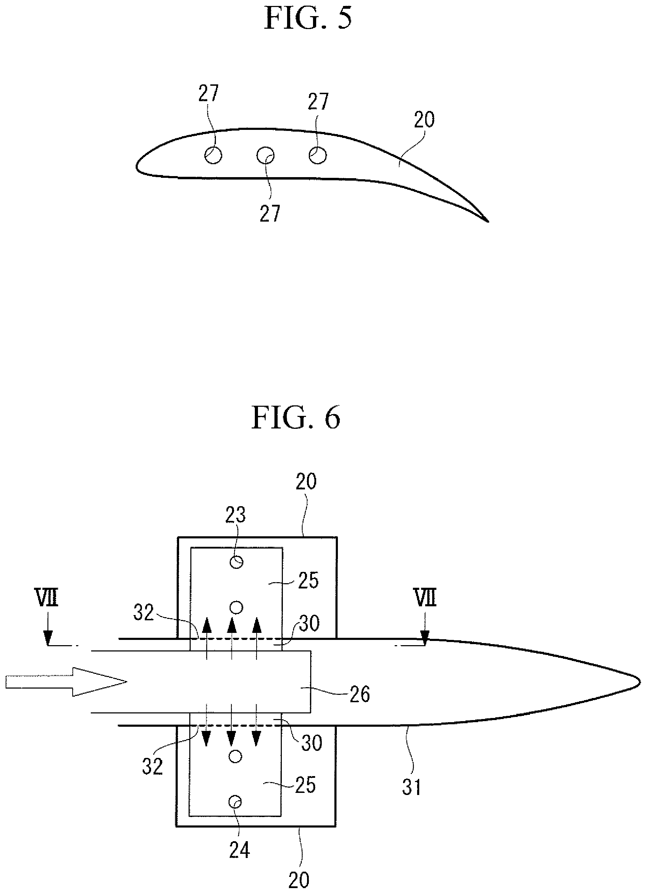

A gas turbine combustion burner according to a first example serving to explain features of the present invention will be described below with reference to Figs. 1 to 5. Fig. 1 is a schematic structural diagram showing a gas turbine combustor including gas turbine combustion burners according to the present invention; Fig. 2 is a perspective view showing the gas turbine combustor shown in Fig. 1, showing fuel nozzles, an inner cylinder, and a tailpipe in an exploded view; Fig. 3 is a sectional view showing, in magnified view, a relevant part of a gas turbine combustion burner according to the first example; Fig. 4 is a sectional view as viewed along arrow IV-IV in Fig. 3; and Fig. 5 is a sectional view as viewed along arrow V-V in Fig. 3.

A gas turbine 1 (see Fig. 1) including gas turbine combustors (hereinafter referred to as "combustors") 10 shown in Figs. 1 and 2 includes a compressor (not shown) and a turbine (not shown) in addition to the combustors 10. Most gas turbines include a plurality of combustors 10; they mix air compressed by the compressor (compressed air) with fuel supplied to the combustors 10 and combust it in the individual combustors 10, thereby producing high-temperature combustion gas. This high-temperature combustion gas is supplied to the turbine to rotate and drive the turbine.

As shown in Fig. 1, the plurality of combustors 10 are arranged in a circle in a combustor casing 11 (only one of them is shown in Fig. 1). The combustor casing 11 and a gas turbine casing 12 are filled with compressed air, forming a chamber 13. The air compressed by the compressor is introduced into the chamber 13. The introduced compressed air enters the combustor 10 through an air inlet 14 provided in an upstream portion of the combustor 10. In an inner cylinder 15 of the combustor 10, fuel supplied from a combustion burner 16 is mixed with the compressed air and is combusted. Combustion gas produced by combustion is supplied through a tailpipe 17 to a turbine chamber to rotate a turbine rotor (not shown).

Fig. 2 is a perspective view showing the combustion burner 16, the inner cylinder 15, and the tailpipe 17 in an exploded view.

As shown in Fig. 2, the combustion burner 16 includes a plurality of main combustion burners (gas turbine combustion burners) 18 and a single pilot combustion burner (gas turbine combustion burner) 19.

As shown in Fig. 2, the plurality of main combustion burners 18 are disposed in the inner cylinder 15 so as to surround the pilot combustion burner 19. Fuel ejected from the main combustion burners 18 is premixed with a swirling flow of air through swirling vanes (swirler vanes) 20 of the main combustion burners 18 and is combusted in the inner cylinder 15.

The main combustion burners 18 are each composed mainly of a main fuel nozzle (hereinafter referred to as "main nozzle") 21, a main burner cylinder 22, and swirling vanes 20.

The main burner cylinder 22 is disposed concentrically with the main nozzle 21 so as to surround the main nozzle 21. Thus, the outer circumferential surface of the main nozzle 21 and the inner circumferential surface of the main burner cylinder 22 form an annular air passage (not shown) through which the compressed air (not shown) flows from the upstream side to the downstream side.

A plurality of (in this example, six) swirling vanes 20 are arranged radially from the outer circumferential surface of the main nozzle 21 along the axial direction of the main nozzle 21.

As shown in Figs. 4 and 5, the swirling vanes 20 are streamlined members having a wing shape in sectional view; they apply a swirling force to the compressed air flowing through the air passage formed between the outer circumferential surface of the main nozzle 21 and the inner circumferential surface of the main burner cylinder 22, thereby changing the compressed air to a swirling airflow.

As shown in Fig. 4, a plurality of (in this example, two) (fuel) ejection holes 23 are formed through a dorsal surface 20a of each swirling vane 20 in the thickness direction, and a plurality of (in this example, two) (fuel) ejection holes 24 are formed through a ventral surface 20b of each swirling vane 20 in the thickness direction. A cavity 25 communicating with the ejection holes 23 and 24 is provided in each swirling vane 20, and a (first) fuel passage 26 (see Fig. 3) is provided in the main nozzle 21. The cavity 25 communicates with the fuel passage 26 through a plurality of (in this example, three) (second) fuel passages 27 (see Figs. 3 and 5) such that fuel is supplied through the fuel passages 26 and 27 and the cavities 25 to the ejection holes 23 and 24. The fuel ejected from the ejection holes 23 and 24 is mixed with the compressed air, and the fuel gas is supplied to the inner space of the inner cylinder 15 and is combusted.

In the main combustion burner 18 according to this example, the fuel guided (supplied) through the fuel passage 26 toward the swirling vanes 20 is guided through the plurality of fuel passages 27 to the cavities 25 and is ejected (jetted) from the ejection holes 23 and 24. As the fuel passes through the fuel passages 27, dynamic pressure generated in the fuel passage 26 is dispersed so that the fuel flows (is supplied) evenly (uniformly) from the individual fuel passages 27 into the cavities 25, thus preventing the formation of vortices in the cavities 25.

This allows uniform ejection of the fuel from the ejection holes 23 and 24, thus contributing to reduced NOₓ emissions of the combustor 10.

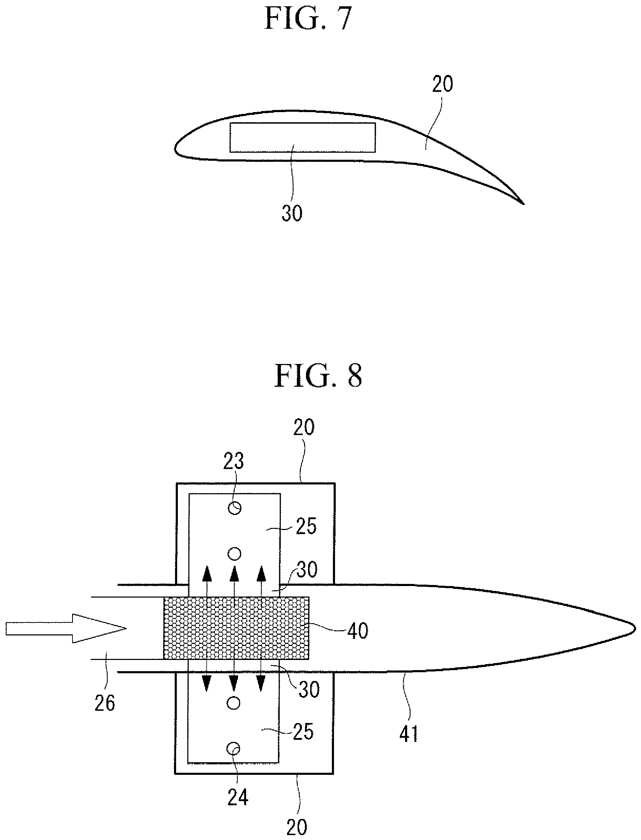

A first embodiment of a gas turbine combustion burner according to the present invention will now be described with reference to Figs. 6 and 7. Fig. 6 is a sectional view showing, in magnified view, a relevant part of the gas turbine combustion burner according to this embodiment, and Fig. 7 is a sectional view as viewed along arrow VII-VII in Fig. 6.

The main combustion burner 18 (gas turbine combustion burner) according to this embodiment differs from that of the first example described above in that it includes a main nozzle 31 having a single (second) fuel passage 30 instead of the plurality of fuel passages 27 shown in Figs. 3 and 5. The other elements are the same as those of the first example described above; a description of these elements will be omitted here.

The same members as those of the first example described above are designated by the same reference signs.

As shown in Figs. 6 and 7, each cavity 25 communicates with the fuel passage 26 through, for example, a slit-like fuel passage 30 having the same passage cross-section as the cavity 25, and a rectifier grid 32 is disposed at an exit end (or entrance end) of the fuel passage 30.

In the main combustion burner 18 according to this embodiment, the fuel guided (supplied) through the fuel passage 26 toward the swirling vanes 20 is guided through the fuel passages 30 and the rectifier grids 32 to the cavities 25 and is ejected (jetted) from the ejection holes 23 and 24. As the fuel passes through the fuel passages 30 and the rectifier grids 32, dynamic pressure generated in the fuel passage 26 is dispersed so that the fuel flows (is supplied) evenly (uniformly) from the fuel passages 30 into the cavities 25, thus preventing the formation of vortices in the cavities 25.

This allows uniform ejection of the fuel from the ejection holes 23 and 24, thus contributing to reduced NOₓ emissions of the combustor 10.

A second embodiment of a gas turbine combustion burner according to the present invention will now be described with reference to Fig. 8. Fig. 8 is a sectional view showing, in magnified view, a relevant part of the gas turbine combustion burner according to this embodiment.

The main combustion burner (gas turbine combustion burner) 18 according to this embodiment differs from that of the first embodiment described above in that it includes a main nozzle 41 having a pressure loss member 40 instead of the rectifier grids 32 shown in Fig. 6. The other elements are the same as those of the first embodiment described above; a description of these elements will be omitted here.

The same members as those of the first embodiment described above are designated by the same reference signs.

As shown in Fig. 8, for example, a pressure loss member 40 formed of a porous material is disposed at the end (downstream end) of the fuel passage 26 such that the fuel flowing from the upstream side of the fuel passage 26 is supplied through the pressure loss member 40 and the fuel passages 30 to the cavities 25.

In the main combustion burner 18 according to this embodiment, the fuel guided (supplied) through the fuel passage 26 toward the swirling vanes 20 is guided through the fuel passages 30 and the pressure loss member 40 to the cavities 25 and is ejected (jetted) from the ejection holes 23 and 24. As the fuel passes through the fuel passages 30 and the pressure loss member 40, dynamic pressure generated in the fuel passage 26 is dispersed so that the fuel flows (is supplied) evenly (uniformly) from the fuel passages 30 into the cavities 25, thus preventing the formation of vortices in the cavities 25.

This allows uniform ejection of the fuel from the ejection holes 23 and 24, thus contributing to reduced NOₓ emissions of the combustor 10.

The present invention is not limited to the above example and embodiments and can also be applied to the pilot combustion burner 19.

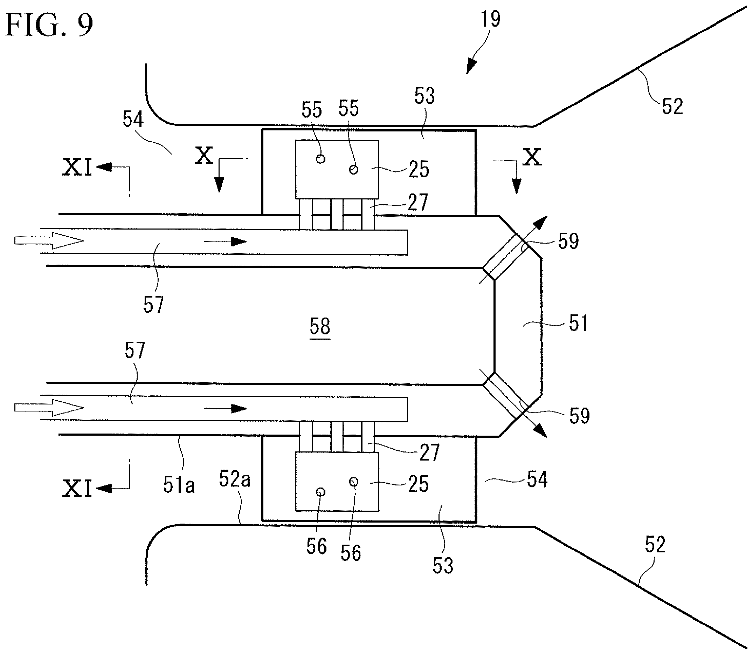

As shown in Fig. 2 or 9, the pilot combustion burner 19 is composed mainly of a pilot combustion nozzle (hereinafter referred to as "pilot nozzle") 51, a pilot burner cylinder 52, and swirling vanes (swirler vanes) 53.

The pilot burner cylinder 52 is disposed concentrically with the pilot nozzle 51 such that its base end (left end in Fig. 9) surrounds the leading end (right end in Fig. 9) of the pilot nozzle 51. Thus, the outer circumferential surface 51a of the leading end of the pilot nozzle 51 and the inner circumferential surface 52a of the base end of the pilot burner cylinder 52 form an annular air passage 54 through which the compressed air (not shown) flows from upstream (to the left in Fig. 9) to downstream (to the right in Fig. 9).

Here, for simplicity of illustration, the swirling vanes 53 are not shown in Fig. 2.

A plurality of (in this embodiment, eight) swirling vanes 53 are arranged radially from the outer circumferential surface 51a of the leading end of the pilot nozzle 51 along the axial direction of the pilot nozzle 51.

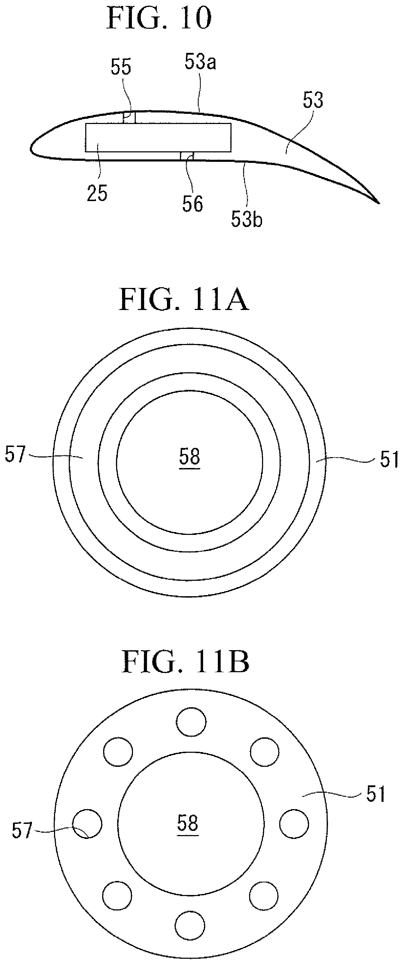

As shown in Fig. 10, the swirling vanes 53 are streamlined members having a wing shape in sectional view; they apply a swirling force to the compressed air flowing through the air passage 54 formed between the outer circumferential surface 51a of the leading end of the pilot nozzle 51 and the inner circumferential surface 52a of the base end of the pilot burner cylinder 52, thereby changing the compressed air to a swirling airflow.

As shown in Fig. 9 or 10, a plurality of (for example, two) (fuel) ejection holes 55 are formed through a dorsal surface 53a of each swirling vane 53 in the thickness direction, and a plurality of (for example, two) (fuel) ejection holes 56 are formed through a ventral surface 53b of each swirling vane 53 in the thickness direction. A cavity 25 communicating with the ejection holes 55 and 56 is provided in each swirling vane 53, and a single fuel passage 57 (for premixed combustion) having an annular shape in sectional view, as shown in Fig. 11A - not according to the invention as claimed, or a plurality of (in this embodiment, eight) fuel passages 57 (for premixed combustion) having a circular shape in sectional view, as shown in Fig. 11B, are provided in the pilot nozzle 51. The cavity 25 communicates with the (first) fuel passage 57 through the fuel passages 27, described in the first example, such that fuel is supplied through the fuel passages 57 and 27 and the cavities 25 to the ejection holes 55 and 56. The fuel ejected from the ejection holes 55 and 56 is mixed with the compressed air, and the fuel gas is supplied to the inner space of the inner cylinder 15 and is combusted.

A fuel passage 58 (for premixed combustion) separate from the fuel passage 57 is provided in the center of the pilot nozzle 51 located radially inside the fuel passage 57 such that the fuel supplied through the (third) fuel passage 58 is ejected from a plurality of (fuel) ejection holes 59 provided at the end of the pilot nozzle 51, is supplied to the inner space of the inner cylinder 15, and is combusted.

### {Reference Signs List}

- 10: combustor (gas turbine combustor)
- 18: main combustion burner (gas turbine combustion burner)
- 19: pilot combustion burner (gas turbine combustion burner)
- 20: swirling vane
- 21: main nozzle (nozzle)
- 23: ejection hole (fuel ejection hole)
- 24: ejection hole (fuel ejection hole)
- 25: cavity
- 26: fuel passage (first fuel passage)
- 27: fuel passage (second fuel passage)
- 30: fuel passage (third fuel passage)
- 31: main nozzle (nozzle)
- 32: rectifier grid
- 40: pressure loss member
- 41: main nozzle (nozzle)
- 51: pilot nozzle (nozzle)
- 53: swirling vane
- 55: ejection hole (fuel ejection hole)
- 56: ejection hole (fuel ejection hole)
- 57: fuel passage (first fuel passage)

## Claims

1. A gas turbine combustion burner (19) comprising therein
a plurality of swirling vanes (53) for ejecting fuel from fuel ejection holes (55,56) into air or a mixture of air and fuel flowing from an upstream side while applying a swirling force to form a swirling mixed airflow, and
a nozzle (51) having the swirling vanes (53) arranged radially on an outer circumferential surface thereof and having a plurality of first fuel passage (57), through which the fuel can be guided to the fuel ejection holes (55,56),
wherein a cavity (25) communicating with the fuel ejection holes (55,56) is provided in each swirling vane (53), and at least two second fuel passages (27) are provided between the cavity (25) and the first fuel passages (57) along an axial direction such that, as the fuel passes through the second fuel passages (27), dynamic pressure generated in the first fuel passages (57) is dispersed so that the fuel flows evenly from the individual second fuel passages (27) into the cavity (25).

2. A gas turbine combustion burner (19) according to claim 1, wherein a further fuel passage (58) separate from the first fuel passages (57) is provided in the center of the nozzle (19) located radially inside the first fuel passages (57) such that the fuel supplied through the further fuel passage (58) can be ejected from a plurality of ejection holes (59) provided at the end of the nozzle (19).

3. A gas turbine combustion burner (18) comprising therein
a plurality of swirling vanes (20) for ejecting fuel from fuel ejection holes (23,24) into air or a mixture of air and fuel flowing from an upstream side while applying a swirling force to form a swirling mixed airflow, and
a nozzle (31) having the swirling vanes (20) arranged radially on an outer circumferential surface thereof and having a first fuel passage (26), through which the fuel can be guided to the fuel ejection holes (23,24),
wherein a cavity (25) communicating with the fuel ejection holes (23,24) is provided in each swirling vane (20), a slit-like second fuel passage (30) is provided between the cavity (25) and the first fuel passage (26) along an axial direction, and a rectifier grid (32) is disposed at an exit or entrance end of the second fuel passage (30) such that, as the fuel passes through the second fuel passage (30) and the rectifier grid (32), dynamic pressure generated in the first fuel passage (26) is dispersed so that the fuel flows evenly from the second fuel passage (30) into the cavity (25).

4. A gas turbine combustion burner (18) comprising therein
a plurality of swirling vanes (20) for ejecting fuel from fuel ejection holes (23,24) into air or a mixture of air and fuel flowing from an upstream side while applying a swirling force to form a swirling mixed airflow, and
a nozzle (41) having the swirling vanes (20) arranged radially on an outer circumferential surface thereof and having a first fuel passage (26), through which the fuel can be guided to the fuel ejection holes (23,24),
wherein a cavity (25) communicating with the fuel ejection holes (23,24) is provided in each swirling vane (20), a slit-like second fuel passage (30) is provided between the cavity (25) and the first fuel passage (26) along an axial direction, and a pressure loss member (40) formed of a porous material is disposed at the downstream end of the first fuel passage (26) near the upstream side of the second fuel passage (30) such that, as the fuel passes through the second fuel passage (30) and the pressure loss member (40), dynamic pressure generated in the first fuel passage (26) is dispersed so that the fuel flows evenly from the second fuel passage (30) into the cavity (25).

5. A gas turbine combustor (10) comprising the gas turbine combustion burner (18;19) according to any one of Claims 1 to 4.

## Patentansprüche

1. Ein Gasturbinenbrenner (19), der darin aufweist:
eine Vielzahl von Verwirbelungsflügeln (53) zum Ausstoßen von Brennstoff aus Brennstoffausstoßlöchern (55,56) in Luft oder ein Gemisch von Luft und Brennstoff, die von einer stromaufwärtigen Seite strömen, während eine Verwirbelungskraft aufgebracht wird, um einen verwirbelten gemischten Luftstrom zu bilden, und
eine Düse (51), die die Verwirbelungsflügel (53) radial an einer Außenumfangsoberfläche davon angeordnet aufweist und die eine Vielzahl von ersten Brennstoffdurchgängen (57), durch die der Brennstoff zu den Brennstoffausstoßlöchern (55,56) geführt werden kann, aufweist,
wobei ein Hohlraum (25), der mit den Brennstoffausstoßlöchern (55,56) kommuniziert, in jedem Verwirbelungsflügel (53) vorgesehen ist, und zumindest zwei zweite Brennstoffdurchgänge (27) zwischen dem Hohlraum (25) und den ersten Brennstoffdurchgängen (57) entlang einer Axialrichtung so vorgesehen sind, dass, wenn der Brennstoff durch die zweiten Brennstoffdurchgänge (27) passiert, ein in den ersten Brennstoffdurchgängen (57) erzeugter dynamischer Druck so verteilt wird, dass der Brennstoff gleichmäßig von den individuellen zweiten Brennstoffdurchgängen (27) in den Hohlraum (25) einströmt.

2. Ein Gasturbinenbrenner (19) gemäß Anspruch 1, wobei ein weiterer Brennstoffdurchgang (58) separat von den ersten Brennstoffdurchgängen (57) in der Mitte der Düse (19) radial einwärts der ersten Brennstoffdurchgänge (57) befindlich so vorgesehen ist, dass der durch den weiteren Brennstoffdurchgang (58) zugeführte Brennstoff aus einer Vielzahl von Ausstoßlöchern (59), die an dem Ende der Düse (19) vorgesehen sind, ausgestoßen werden kann.

3. Ein Gasturbinenbrenner (18), der darin aufweist:
eine Vielzahl von Verwirbelungsflügeln (20) zum Ausstoßen von Brennstoff aus Brennstoffausstoßlöchern (23,24) in Luft oder ein Gemisch aus Luft und Brennstoff, die von einer stromaufwärtigen Seite strömen, während eine Verwirbelungskraft aufgebracht wird, um einen verwirbelten gemischten Luftstrom zu bilden, und
eine Düse (31), die die Verwirbelungsflügel (20) radial an einer äußeren Umfangsoberfläche davon angeordnet aufweist und die einen ersten Brennstoffdurchgang (26), durch den der Brennstoff zu den Brennstoffausstoßlöchern (23,24) geführt werden kann, aufweist,
wobei ein Hohlraum (25), der mit den Brennstoffausstoßlöchern (23,24) kommuniziert, in jedem Verwirbelungsflügel (20) vorgesehen ist, ein schlitzartiger zweiter Brennstoffdurchgang (30) zwischen dem Hohlraum (25) und dem ersten Brennstoffdurchgang (26) entlang einer Axialrichtung vorgesehen ist, und ein Ausrichtgitter (32) an einem Ausgangs- oder Eingangsende des zweiten Brennstoffdurchgangs (30) so angeordnet ist, dass, während der Brennstoff durch den zweiten Brennstoffdurchgang (30) und das Ausrichtgitter (32) passiert, ein in dem ersten Brennstoffdurchgang (26) erzeugter dynamischer Druck so verteilt wird, dass der Brennstoff gleichmäßig von dem zweiten Brennstoffdurchgang (30) in den Hohlraum (25) einströmt.

4. Ein Gasturbinenbrenner (18), die darin aufweist:
eine Vielzahl von Verwirbelungsflügeln (20) zum Ausstoßen von Brennstoff aus Brennstoffausstoßlöchern (23,24) in Luft oder ein Gemisch aus Luft und Brennstoff, die von einer stromaufwärtigen Seite strömen, während eine Verwirbelungskraft zur Bildung eines verwirbelten gemischten Luftstroms aufgebracht wird, und
eine Düse (41), die die Verwirbelungsflügel (20) radial an einer äußeren Umfangsoberfläche davon angeordnet aufweist und die einen ersten Brennstoffdurchgang (26), durch den der Brennstoff zu den Brennstoffausstoßlöchern (23,24) geführt werden kann, aufweist,
wobei ein Hohlraum (25), der mit den Brennstoffausstoßlöchern (23,24) kommuniziert, in jedem Verwirbelungsflügel (20) vorgesehen ist, ein schlitzartiger zweiter Brennstoffdurchgang (30) zwischen dem Hohlraum (25) und dem ersten Brennstoffdurchgang (26) entlang einer Axialrichtung vorgesehen ist, und ein Druckverlustelement (40), das aus einem porösem Material gebildet ist, an dem stromabwärtigen Ende des ersten Brennstoffdurchgangs (26) nahe der stromaufwärtigen Seite des zweiten Brennstoffdurchgangs (30) so angeordnet ist, dass, während der Brennstoff durch den zweiten Brennstoffdurchgang (30) und das Druckverlustelement (40) passiert, ein in dem ersten Brennstoffdurchgang (26) erzeugter dynamischer Druck so verteilt wird, dass der Brennstoff gleichmäßig von dem zweiten Brennstoffdurchgang (30) in den Hohlraum (25) einströmt.

5. Eine Gasturbinenbrennkammer (10) mit dem Gasturbinenbrenner (18;19) gemäß einem der Ansprüche 1 bis 4.

## Revendications

1. Brûleur (19) à combustion pour une turbine à gaz, comprenant en son sein
Une pluralité de pales (53) de tourbillonnement pour éjecter du combustible de trous (55, 56) d'éjection de combustible dans de l'air ou dans un mélange d'air et de combustible s'écoulant d'un côté en amont, tout en appliquant une force de tourbillonnement pour former un écoulement d'air mixte en tourbillonnement et
une buse (51), ayant les pales (53) de tourbillonnement disposées radialement sur sa surface circonférentielle extérieure et ayant une pluralité de premiers passages (57) pour du combustible, par lesquels le combustible peut être conduit aux trous (55, 56) d'éjection de combustible,
dans lequel une cavité (25), communiquant avec les trous (55, 56) d'éjection de combustible, est prévue dans chaque pale (53) de tourbillonnement et au moins deux deuxièmes passages (27) pour du combustible sont prévus entre la cavité (25) et les premiers passages (27) pour du combustible suivant une direction axiale, de manière à ce que, alors que le combustible passe dans les deuxièmes passages (27) pour du combustible, une pression dynamique, produite dans les premiers passages (57) pour du combustible, soit dispersée, de sorte que le combustible s'écoule uniformément des deuxièmes passages (27) individuels pour du combustible à la cavité (25).

2. Brûleur (19) à combustion pour une turbine à gaz suivant la revendication 1, dans lequel un autre passage (8) pour du combustible, distinct des premiers passages (57) pour du combustible, est prévu au centre de la buse (19), en étant placé radialement à l'intérieur des premiers passages (57) pour du combustible, de manière à ce que le combustible, fourni par l'autre passage (58) pour du combustible, puisse être éjecté d'une pluralité de trous (59) d'éjection prévus à l'extrémité de la buse (59).

3. Brûleur (18) à combustion pour une turbine à gaz, comprenant en son sein
une pluralité de pales (20) de tourbillonnement pour éjecter du combustible de trous (23, 24) d'éjection de combustible dans de l'air ou dans un mélange d'air et de combustible s'écoulant d'un côté en amont, tout en appliquant une force de tourbillonnement pour former un écoulement d'air mélangé en tourbillonnement et
une buse (31) ayant les pales (20) de tourbillonnement, disposées radialement sur sa surface circonférentielle extérieure et ayant un premier passage (26) pour du combustible, par lequel le combustible peut être conduit aux trous (23, 24) d'éjection de combustible,
dans lequel une cavité (25), communiquant avec les trous (23, 24) d'éjection de combustible, est prévue dans chaque pale (20) de tourbillonnement, un deuxième passage (30) pour du combustible, analogue à une fente, est prévu entre la cavité (25) et le premier passage (26) pour du combustible suivant une direction axiale, et une grille (32) de rectification est disposée à une extrémité de sortie ou d'entrée du deuxième passage (30) pour du combustible, de manière à ce que, alors que le combustible passe dans le deuxième passage (30) pour du combustible et la grille (32) de rectification, une pression dynamique, produite dans le premier passage (26) pour du combustible, soit dispersée, de manière à ce que le combustible s'écoule uniformément du deuxième passage (30) pour du combustible à la cavité (25).

4. Brûleur (18) à combustion pour une turbine à gaz, comprenant en son sein
une pluralité de pales (20) de tourbillonnement pour éjecter du combustible de trous (23, 24) d'éjection de combustible dans de l'air ou dans un mélange d'air et de combustible s'écoulant d'un côté en amont, tout en appliquant une force de tourbillonnement pour former un écoulement d'air mélangé en tourbillonnement et
une buse (31) ayant les pales (20) de tourbillonnement, disposées radialement sur sa surface circonférentielle extérieure et ayant un premier passage (26) pour du combustible, par lequel le combustible peut être conduit aux trous (23, 24) d'éjection de combustible,
dans lequel une cavité (25), communiquant avec les trous (23, 24) d'éjection de combustible, est prévue dans chaque pale (20) de tourbillonnement, un deuxième passage (30) pour du combustible, analogue à une fente, est prévu entre la cavité (25) et le premier passage (26) pour du combustible dans une direction axiale, et un élément (40) de perte de pression, en un matériau poreux, est disposé à l'extrémité en aval du premier passage (26) pour du combustible, à proximité du côté en amont du deuxième passage (30) pour du combustible, de manière à ce que, alors que le combustible passe dans le deuxième passage (30) pour du combustible et dans l'élément (40) de perte de pression, une pression dynamique produite dans le premier passage (26) pour du combustible soit dispersée, de manière à ce que le combustible s'écoule uniformément du deuxième passage (30) pour du combustible à la cavité (25).

5. Chambre de combustion (10) d'une turbine à gaz, comprenant le brûleur (18 ; 19) à combustion d'une turbine à gaz suivant l'une quelconque des revendications 1 à 4.
